# EUROPÄISCHE PATENTSCHRIFT

(11) **EP 0 507 423 B1**
(45) Veröffentlichungstag und Bekanntmachung des Hinweises auf die Patenterteilung: **20.11.1996**
(21) Anmeldenummer: 92250072.3
(22) Anmeldetag: 26.03.1992
(51) Int. Cl.: F16L 13/00, F16L 13/08, F16L 13/02, F16L 13/10, F16L 41/02

(54) **Leitungsrohrverbindung**
Pipe connection
Raccord de tuyaux

(30) Priorität: 04.04.1991 DE 9104147 U
(43) Veröffentlichungstag der Anmeldung: 07.10.1992
(73) Patentinhaber: MANNESMANN Aktiengesellschaft, 40027 Düsseldorf (DE)
(72) Erfinder: Unewisse, Heinz, W-4330 Mülheim/Ruhr (DE); Foering, Herbert, W-5650 Solingen 11 (DE)
(74) Vertreter: Meissner, Peter E., Dipl.-Ing.

(56) Entgegenhaltungen:
- EP-A- 0 343 395
- EP-A- 0 403 037
- DE-A- 3 809 479
- Dubbel, Taschenbuch für den Maschinenbau, Springer Verlag, 17. Auflage, Seite M28

## Beschreibung

Die Erfindung betrifft die Verwendung eines aus Blech hergestellten Anschlußstückes für die Verbindung eines Absperrorganes der Wasser- und Heizunginstallation mit einem Leitungsrohr.

Aus der EP-A-0403 037 ist die Verwendung eines aus Blech hersgestellten standardisierten Anschlußstückes bekannt, mit den Merkmalen, die im ersten Teil des Anspruchs 1 enthalten sind.
Darüberhinaus sei beispielsweise auf "DUBBEL, Taschenbuch für den Maschinenbau (Springer-Verlag, 17.Auflage, Seite M28 Bild 21) verwiesen, wo ganz allgemein marktübliche Armaturen z.B. Heizkörperventile dargestellt sind.

Aus der EP 0 343 395 ist ein weiteres Verbindungssystem bekannt. Bei diesem System wird ein Anschlußstutzen einer Armatur oder eines Fittings aus Metallguß mit einem bis zu einem Anschlag eingeschobenen Leitungsrohr mittels eines außen angesetzten Preßwerkzeuges verpreßt. Damit die unlösbare Verbindung dicht ist, weist der Anschlußstutzen im Endbereich an der Außenseite einen Ringwulst auf, in dessen Innenseite ein Runddichtring angeordnet ist. Als Gußwerkstoff wird vorzugsweise eine Rotgußlegierung verwendet, der zur Erhöhung der Bruchdehnung ein Nickelgehalt von 2,2 bis 3 % zugesetzt ist. Außerdem weist die vorgeschlagene Legierung einen hohen Bleigehalt von 5 % auf, damit das Element spanend gut bearbeitbar ist. Nachteilig bei diesem System ist, daß Legierungszusammensetzung und Abmessung des zu verpressenden Abschnittes des Anschlußstutzens in ganz engen Grenzen gehalten werden müssen, damit eine Verpressung des Gußteiles mit dem Leitungsrohr ohne Anriß möglich ist. Ein weiterer Nachteil des vorgeschlagenen Verbindungssystems ist darin zu sehen, daß eine beschädigte oder verschlissene Armatur ohne Zerstörung des Verbindungssystems nicht ausgewechselt werden kann.

Aufgabe der Erfindung ist es, eine Verbindung eines Elementes der Wasser- und Heizungsinstallation, insbesondere Formteil und Armatur mit einem Leitungsrohr anzugeben, die einfach und handwerksgerecht einen fehlerfreien Einbau eines Elementes auch aus schwer umzuformenden Werkstoffen in ein Installationssystem ermöglicht. Weiterhin soll das Verbindungssystem die Austauschmöglichkeit einer beschädigten oder verschlissenen Armatur gestatten.

Diese Aufgabe wird durch die kennzeichnenden Merkmale des Hauptanspruches gelöst. Vorteilhafte Weiterbildungen sind Bestandteil von Unteransprüchen.

Der wesentliche Aspekt der vorgeschlagenen Verbindung ist darin zu sehen, daß der Anschlußstutzen des Installationselementes, sei es eine Armatur oder ein beliebiges Formteil aus einem aus Blech hergestellten standardisierten Fittingelement gebildet wird und mit dem Installationselement durch Löten, Schweißen oder Kleben fest verbunden ist. Das Fittingelement weist in bekannter Weise ein einen Runddichtring aufnehmendes Ende und einen daran anschließenden zylindrisch ausgebildeten Bereich auf. Dieses Verbindungssystem hat den Vorteil, daß das Installationselement wegen seiner oft verwickelten und schwer herstellbaren Geometrie als Guß- oder Preßteil hergestellt ist und durch die Kopplung mit dem aus Blech hergestellten standardisierten Fittingelement in einfacher Weise mit dem Leitungsrohr durch Verpressung unlösbar verbunden werden kann. Damit sind auch Kombinationen unterschiedlicher Werkstoffe wie z. B. Rotguß mit Edelstahl oder eine meerwasserbeständige Kupfer-Nickel-Knetlegierung mit Edelstahl möglich, um die Anzahl unterschiedlicher standardisierter Fittingelemente gering zu halten. Eingesetzt werden kann auch Titan, das besonders schwierig umzuformen ist und deshalb in vielen Fällen als möglicher Werkstoff gar nicht erst in Erwägung gezogen wird. Die einfache und handwerksgerechte Verpressung kann bei dieser Kombination beibehalten werden, ohne Gefahr zu laufen, bei kritischen Werkstoffen für das Installationselement mit Anrissen im Verbindungsbereich rechnen zu müssen.

Der für das Einschieben des Leitungsrohres notwendige Anschlag kann wahlweise durch einen entsprechenden Absatz im Fittingelement oder durch die Stirnfläche des Stutzenbereiches des anzuschließenden Installationselementes gebildet werden.

Bei Armaturen ist es zweckdienlich, wenn das Verbindungssystem eine einfache Austauschmöglichkeit der möglicherweise beschädigten oder verschlissenen Armatur gestattet. In diesem Fall wird vorgeschlagen, das Stutzenelement als Adapter auszubilden und diesen lösbar mit der Armatur zu verbinden. Auf diese Weise kann das bewährte Preßsystem zwischen Stutzen und Leitungsrohr beibehalten und trotzdem die beschädigte Armatur in einfacher Weise ausgebaut und durch eine neue ersetzt werden.

In der Zeichnung wird anhand einiger Ausführungsbeispiele die erfindungsgemäße Verbindung näher erläutert.

Es zeigen:
- Figur 1: einen Querschnitt durch eine erste Ausführungsform
- Figur 2: wie Fig. 1, jedoch mit einem abgeänderten Übergang
- Figur 3: wie Fig. 1, jedoch mit einer anderen Ausführung des Anschlages.
- Figur 4: einen Längsquerschnitt durch einen Armaturanschluß

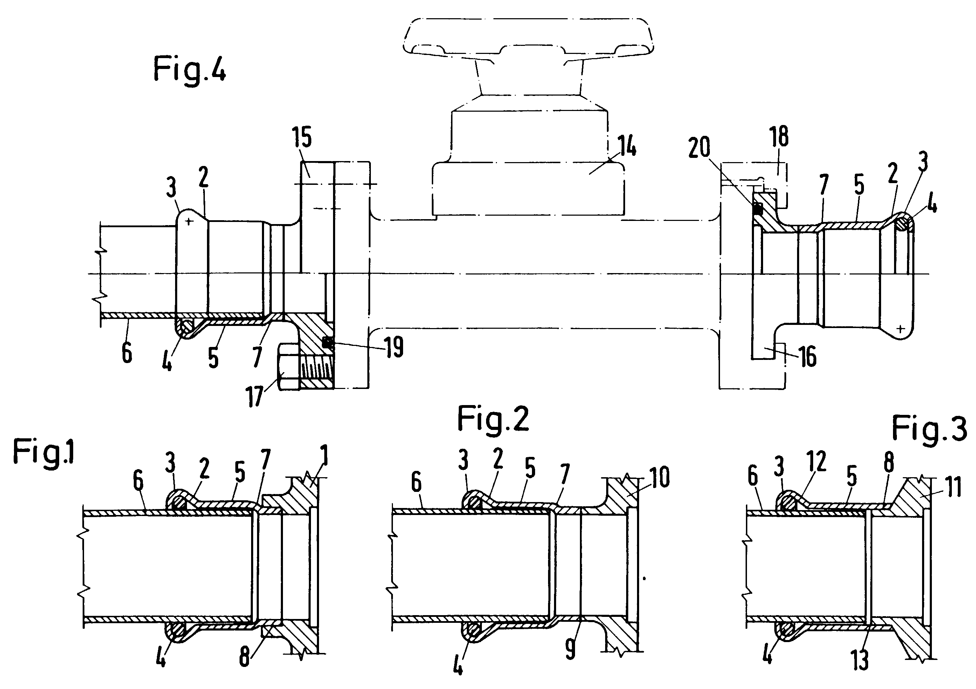

Figur 1 zeigt in einem Längsquerschnitt eine erste Ausführungsform der vorgeschlagenen Verbindung. Ein beliebiges Formelement 1 für die Wasser- und Heizungsinstallation ist mit einem aus Blech gefertigten standardisierten Fittingelement 2 fest verbunden. Dieses weist in bekannter Weise am Ende einen Ringwulst 3 auf, in dem ein Runddichtring 4 angeordnet ist. An dem Ringwulst 3 schließt sich auf der anderen Seite ein zylindrisch geformter Abschnitt 5 des Fittingelementes 2 an. Das andere Ende des Fittingelementes 2 ist so abgesetzt, daß es einen Anschlag 7 für das eingeschobene Leitungsrohr 6 bildet. Die Verbindungsstelle zwischen Fittingelement 2 und Formteil 1 weist beispielsweise eine Lötnaht 8 auf. Es könnte aber ebensogut eine Schweißnaht oder eine Klebeschicht sein.

Figur 2 ist vergleichbar wie Figur 1, jedoch mit einem anderen Übergang zwischen Fittingelement 2 und Formteil 10. Der Übergang ist glattbündig und die Verbindungsstelle weist beispielsweise eine Schweißnaht 9 auf. Figur 3 zeigt im gleichen Längsquerschnitt wie Fig. 1 bzw. 2 eine weitere Ausführungsform der Verbindung. In diesem Falle weist das Fittingelement 12 im zylindrischen Abschnitt 5 keinen Absatz auf und die Stirnfläche 13 des Formteiles 11 bildet den Anschlag für das eingeschobene Leitungsrohr 6. Die Verbindungsstelle selbst soll wieder eine Lötnaht 8 aufweisen.

Figur 4 zeigt die Anschlußmöglichkeit einer Armatur, hier beispielsweise ein Ventil 14, mit dem Fittingelement 2. Das mit dem Fittingelement 2 verbundene Stutzenelement ist hier als Adapter ausgebildet, so daß das Ventil 14 im Falle einer Beschädigung oder eines Versagens in einfacher Weise ausgewechselt werden kann. Auf der linken Seite der Figur 4 ist der Adapter als Schraubflansch 15 und auf der rechten Seite als Klemmflansch 16 ausgebildet. Die Verbindung mit dem Ventil 14 erfolgt einmal über auf den Umfang verteilt angeordneten Schrauben 17 (linke Seite) und alternativ mittels einer Überwurfmutter 18 (rechte Seite). Die Abdichtung wird durch einen im jeweiligen Adapter 15,16 angeordneten Dichtring 19,20 gewährleistet. Der Vorteil dieses Verbindungssystems ist darin zu sehen, daß die einfache Verpressung des Fittingelementes 2 mit dem Leitungsrohr 6 erhalten bleibt und außerdem die Armatur 14 in einfacher Weise ausgewechselt werden kann.

## Patentansprüche

1. Verwendung eines aus Blech hergestellten standardisierten Anschlußstückes (2, 12), das ein wulstartig ausgebildetes und einen Runddichtring (4) aufnehmendes Ende (3) und einen daran anschließend zylindrisch ausgebildeten Bereich (5) aufweist und stoffschlüssig mit einem gegossenen oder gepreßten Element (1, 10, 11, 15, 16) verbunden ist, für die Verbindung eines Absperrorganes (14) der Wasser- und Heizungsinstallation mit einem Leitungsrohr (6), dessen Endabschnitt in das Anschlußstück (2, 12) eingeschoben und mittels eines außen angesetzten Preßwerkzeuges mit dem Anschlußstück (2, 12) unlösbar verbunden ist, mit der Maßgabe, daß das gegossene oder gepreßte Element (1, 10, 11, 15, 16) als Adapter ausgebildet und lösbar mit dem Absperrorgan (14) verbunden ist.

2. Verwendung nach Anspruch 1,
dadurch gekennzeichnet,
daß das standardisierte Anschlußstück (2, 12) und das damit verbundene gegossene oder gepreßte Element (1, 10, 11, 15, 16) aus unterschiedlichen Werkstoffen hergestellt ist.

3. Verwendung nach Anspruch 1,
dadurch gekennzeichnet,
daß der Anschlag für das eingeschobene Leitungsrohr (6) durch die Stirnfläche (13) des gegossenen oder gepreßten Elementes (11) gebildet wird.

## Claims

1. The use of a standardised connector (2, 12) made from sheet metal, which has a bead-like end (3) which receives a round sealing ring (4) and a cylindrical region (5) adjoining it, and is connected in material-locking manner to a cast or pressed element (1, 10, 11, 15, 16), for connecting a shutoff member (14) of a water and heating plumbing installation to a pipe (6), the end section of which is inserted into the connector (2, 12) and is connected non-detachably to the connector (2, 12) by means of a pressing tool applied externally, with the proviso that the cast or pressed element (1, 10, 11, 15, 16) is designed as an adapter and is connected detachably to the shutoff member (14).

2. The use according to Claim 1, characterised in that the standardised connector (2, 12) and the cast or pressed element (1, 10, 11, 15, 16) connected thereto are made of different materials.

3. The use according to Claim 1, characterised in that the stop for the inserted pipe (6) is formed by the end face (13) of the cast or pressed element (11).

## Revendications

1. Utilisation d'une pièce de raccordement standardisée (2,12) fabriquée en tôle, qui présente une extrémité (3) recevant une bague d'étanchéité circulaire (4) et réalisée sous forme de bourrelet et une zone (5) s'y raccordant réalisée de façon cylindrique et est reliée, par liaison de matière, à un élément coulé ou pressé (1,10,11,15,16), pour la liaison d'un organe d'arrêt (14) de l'installation de distribution d'eau et de chauffage avec un conduit (6) dont le tronçon d'extrémité est introduit dans la pièce de raccordement (2,12) et est relié de façon inamovible à la pièce de raccordement (2,12) au moyen d'un outil de pressage appliqué extérieurement, sous réserve que l'élément coulé ou pressé (1,10,11,15,16) soit réalisé comme adaptateur et soit relié de façon amovible à l'organe d'arrêt (14).

2. Utilisation selon la revendication 1,
caractérisée en ce que la pièce de raccordement standardisée (2,12) et l'élément coulé ou pressé (1,10,11,15,16) relié à celle-ci sont fabriqués en des matières différentes.

3. Utilisation selon la revendication 1,
caractérisée en ce que la butée pour le conduit introduit (6) est formée par la face frontale (13) de l'élément coulé ou pressé (11).
